# EUROPEAN PATENT SPECIFICATION

(11) **EP 4 053 166 B1**
(45) Date of publication and mention of the grant of the patent: **18.06.2025**
(21) Application number: 21305266.5
(22) Date of filing: 05.03.2021
(51) Int. Cl.: C08F 14/22, C08F 2/38, C08F 114/22, C08F 214/22

(54) **METHOD FOR MAKING TELECHELIC FLUORIDE-BASED POLYMERS**
VERFAHREN ZUR HERSTELLUNG VON TELECHELEN POLYMEREN AUF FLUORIDBASIS
PROCÉDÉ DE FABRICATION DE POLYMÈRES TÉLÉCHÉLIQUES À BASE DE FLUORURE

(43) Date of publication of application: 07.09.2022
(73) Proprietor: ARKEMA FRANCE, 92800 Puteaux (FR); Centre national de la recherche scientifique, 75016 Paris (FR); UNIVERSITE DE MONTPELLIER, 34090 Montpellier (FR); Ecole Nationale Supérieure de Chimie de Montpellier, 34090 Montpellier (FR)
(72) Inventor: DEVISME, Samuel, 27470 Serquigny (FR); BONNET, Anthony, 92700 Colombes (FR); AMEDURI, Bruno, 34000 Montpellier (FR); EID, Nadim, 34080 Montpellier (FR)
(74) Representative: Bandpay & Greuter

(56) References cited:
- CN-A- 104 356 266
- JP-A- H07 206 973
- DATABASE CA [online] CHEMICAL ABSTRACTS SERVICE, COLUMBUS, OHIO, US; TOBA, TAKETO ET AL: "Curable compositions for heat-, weather- and soiling-resistant nontacky sealants with good adhesion to substrates and topcoatings", XP002803096, retrieved from STN Database accession no. 1995:879007
- SUBRAHMANYAM SREENATH ET AL: "Optimisation of experimental conditions for synthesis of high affinity MIP nanoparticles", EUROPEAN POLYMER JOURNAL, PERGAMON PRESS LTD OXFORD, GB, vol. 49, no. 1, 8 October 2012 (2012-10-08), pages 100 - 105, XP028963382, ISSN: 0014-3057, DOI: 10.1016/J.EURPOLYMJ.2012.09.022
- DATABASE CA [online] CHEMICAL ABSTRACTS SERVICE, COLUMBUS, OHIO, US; DUAN, QI ET AL: "Manufacture method of poly(vinylidene fluoride) with narrow molecular weight distribution by free radical polymerization in aqueous dispersion system", XP002803091, retrieved from STN Database accession no. 2015:278047

## Description

### Technical field

The present invention relates to a method of polymerizing at least one fluorinated monomer, comprising an ethylene bond, in the presence of a chain transfer agent. The method also relates to a telechelic fluoride-based polymer obtained with said method.

### Technical background

Fluorinated polymers are high performance materials used for applications when properties such as thermal stability, chemical inertness (resistance to oxidation and different chemicals), low values of refractive index, permittivity, dissipation factor, and hydrophobicity as well as excellent durability are required. Hence, they can be applied in many fields such as aeronautics, microelectronics, engineering, chemical industry, optics, textile finishing, automobile industry, and wiring insulation. For example, such polymers can be used as electroactive polymers, fuel cells, optical fibers, coatings, membranes, separators and binders for lithium-ion batteries.

Among these polymers, those containing vinylidene fluoride are of particular importance because they can be used in a wide range of applications from piezoelectric materials to water treatment, coatings and lithium-ion batteries.

Generally, fluorinated polymers can be prepared from the corresponding unsaturated monomers via aqueous polymerization (emulsion, suspension, precipitation) using a fluorinated or non-fluorinated surfactant and a wide range of organic and inorganic initiators such as persulfates, peroxides, hydroperoxides, peroxydicarbonates and peroxyesters.

Telechelic or α,ω-difunctional fluorinated polymers can serve as macromonomers (or oligomers) for the preparation of a wide range of resins (or polycondensates) such as polyesters, polyamides, polyimides, polyurethanes and polycarbonates. Such building blocks are important since they present specific properties such as hydrophobicity, durability, thermal stability and chemical resistance.

In addition, telechelic fluorinated polymers can be prepared via the direct polymerization of fluorinated monomers in the presence of either a telechelic initiator or a difunctional chain transfer agent such as telechelic diiodo perfluoroalkanes, affording iodine terminated fluoropolymers that can be further modified into alcohols, acids, (meth)acrylates and so on.

Document US 5481046 relates to iodine terminated telechelic telomers of chlorotrifluoroethylene prepared by a photochemically initiated reaction between chlorotrifluoroethylene and either elemental iodine or ICF₂CFCII.

Document US 2013/0072635 discloses a telechelic diacrylate fluoropolymer.

Document JP H07 206973A discloses a curing composition comprising a (meth)acrylate ester copolymer, an additional polymerizable monomer containing fluorine atoms, and an additional polymerizable monomer bearing silicon atoms.

The article *"*Synthesis of telechelic fluoropolymers with well-defined functional end groups for cross-linked networks and nanocomposites" (Macromolecules, 2007, 40, 4121-4123) describes the oligomerization of fluorinated monomers such as VDF monomers initiated by functional dibenzoyl peroxide.

The article *"*Use of telechelic fluorinated diiodides to obtain well-defined fluoropolymers" (Journal of Fluorine Chemistry, 1999, 100, 97-116) reports the preparation of fluorinated telechelics from α,ω-diiodoperfluoroalkanes.

The article *"*Synthesis of chain end functionalized fluoropolymers by functional borane initiators and application in the exfoliated fluoropolymer/clay nanocomposites" (Macromolecules, 2007, 40, 15, 5235-5240) relates to the radical polymerization of fluorinated monomers using silicone and borane containing initiators.

The article *"*Photochemical induced polymerization of vinylidene fluoride (VDF) with hydrogen peroxide to obtain original telechelic PVDF" (Journal of Fluorine Chemistry, 2002, Volume 116, Issue 1, 27-34,) relates to the preparation of telechelic fluorinated alcohols via photochemical initiated polymerization of VDF with hydrogen peroxide.

The article *"*Preparation of telechelic hydroxyl low molecular weight fluoropolymers" (Key Engineering Materials, vol. 753, Trans Tech Publications, Ltd., Aug. 2017, 93-98) relates to the preparation of telechelic hydroxyl low molecular weight fluoropolymers by reduction reaction starting from telechelic carboxyl low molecular weight fluoropolymers.

The article *"*Synthesis of novel telechelic fluoropolyols based on vinylidene fluoride/hexafluoropropylene copolymers by iodine transfer polymerization" (Macromolecular Research, 2017, volume 25, 1028-1034) relates to the preparation of poly(VDF-co-HFP) telechelic copolymers via iodine transfer polymerization.

The article *"*Synthesis and characterizations of photo-cross-linkable telechelic diacrylate poly(vinylidene fluoride-co-perfluoromethyl vinyl ether) copolymers" (Macromolecules 2012, 45, 18, 7375-7387) relates to the preparation of telechelic primary dihydroxyl and diacrylate cooligomers based on vinylidene fluoride and perfluoromethyl vinyl ether by chemical modification of diiodo poly(vinylidene fluoride-co-perfluoromethyl vinyl ether) copolymers.

The article *"*Free-radical telomerization of tert-butyl acrylate in the presence of bis(4-aminophenyl) disulfide as a useful route to amino-terminated telomers of poly(acrylic acid)" (Macromolecules, 1993, 26, 2240-2245) relates to the synthesis of telomers of tert-butyl acrylate and of acrylic acid using bis(4-aminophenyl) disulfide as chain transfer agent.

The article *"*Telomerization of bis(trifluoromethyl)disulfide with polyfluoro-olefins" (Journal of Fluorine Chemistry, 1974, Volume 4, Issue 1, 107-110) relates to the photochemical telomerization of fluorinated monomers with bis(trifluoromethyl)disulfide.

The article *"*Photochemically initiated reactions of bistrifluoromethyl disulphide with olefins" (Journal of the Chemical Society, Perkin Transactions 1, 1972, 34-38) relates to the photochemical telomerization of fluorinated monomers with bis(trifluoromethyl)disulfide.

There is still a need for a method for the preparation of telechelic fluorinated polymers that makes it possible to obtain such polymers with a high chain-end functional content. There is also a need for a method for the preparation of telechelic fluorinated polymers that makes it possible to obtain a variety of polymers with different end-functions without the need of post-functionalization.

### Summary of the invention

It is a first object of the invention to provide a method of polymerizing at least one fluorinated monomer comprising an ethylene bond, the method comprising putting in contact the at least one fluorinated monomer with a polymerization initiator and a chain transfer agent, the chain transfer agent having the formula (I):

(I) R-X-(S)_{w}-X'-R'

wherein:
- w is a number ranging from 2 to 8;
- R and R' are independently chosen from a hydrogen atom, a perfluoroalkyl group, a hydroxy group, an amine group, an acid group, an ester group, a thioester group, an amide group, an azide group, a urea group, a carbonate group, a thiocarbonate group, a cyclocarbonate group, an ether group, a thioether group, a cyano group, a silyl group and an aromatic group; and
- X and X' are independently chosen from:
   - a divalent, linear or branched, alkyl radical, comprising from 1 to 10 carbon atoms;
   - -[C_{y}H_{2y})Z]ₚ-, wherein Z is connected to (S)_{w} or R or R' and wherein:
      - y is a number from 1 to 5;
      - Z is chosen from an -O-, -S-, -COO-, -Si(R"R‴)- and -CONH-, wherein R" and R‴ are independently selected from alkyl or alkoxy groups comprising from 1 to 10 carbon atoms;
      - p is a number from 1 to 10;
   - an aromatic divalent radical.

In some variations, R and R' are independently chosen from a hydrogen atom, a hydroxy group, a perfluoroalkyl group comprising at least 5 fluorine atoms, an amine group, an acid group, an azide group, a cyano group, a silyl group, a urea group, a thiourea group, and an ester group.

In some variations, X and X' are independently chosen from -(CH₂)₂-, -[(CH₂)₂O]ₚ-, -[(CH₂)₂S]ₚ- or a phenyl divalent radical.

In some variations, w is 2.

In some variations, the at least one fluorinated monomer is chosen from vinylidene fluoride, trifluoroethylene, vinyl fluoride, tetrafluoroethylene, hexafluoropropylene, hexafluorobutadiene, chlorotrifluoroethylene, bromotrifluoroethylene, perfluoropropylvinylether, perfluoromethylvinylether, 2,3,3,3-tetrafluoropropene, 2-trifluoromethacrylic acid, alkyl 2-trifluoromethacrylate, α-fluoroacrylic acid, alkyl α-fluoroacrylate, α,β-difluoroacrylic acid, alkyl α,β-difluoroacrylate, β,β-difluoroacrylic acid, alkyl β,β-difluoroacrylate, α,β,β-trifluoroacrylic acid, alkyl α,β,β-trifluoroacrylate, 1,1,1-trifluoro-2-trifluoromethyl-prop-2-ene, perfluorobutadiene and their combinations, and wherein the at least one fluorinated monomer preferably comprises vinylidene fluoride.

In some variations, the polymerization initiator is chosen from a peroxide, a persulfate, a percarbonate, a peracid, a peroxycarbonate, a perester, and preferably the polymerization initiator is a perester chosen from *tert-*butylperoxypivalate and *tert*-amylperoxypivalate.

In some variations, at least one further comonomer chosen from a styrene comonomer, a (alkyl)acrylic comonomer, an acrylic comonomer and combinations thereof is put into contact with the at least one fluorinated monomer, the polymerization initiator and the chain transfer agent.

In some variations, the method comprises a first step of putting the chain transfer agent in contact with the polymerization initiator to form a mixture and a second step of putting this mixture in contact with the at least one fluorinated monomer.

In some variations, the polymerization is carried out at a temperature from 30 to 150 °C, more preferably from 60 to 120°C and even more preferably from 65 to 110°C.

In some variations, the polymerization is carried out in the absence of a surfactant.

The invention also relates to a polymer comprising units derived from at least one fluorinated monomer and at least partially comprising R-X-S_{q}- and -S_{w-q}-X'-R' terminal groups wherein:
- w is a number from 2 to 8;
- q is a number from 1 to 7;
- R and R' are independently chosen from a hydrogen atom, a perfluoroalkyl group, a hydroxy group, an amine group, an acid group, an ester group, a thioester group, an amide group, an azide group, a urea group, a carbonate group, a thiocarbonate group, a cyclocarbonate group, an ether group, a thioether group, a cyano group, a silyl group and an aromatic group; and
- X and X' are independently chosen from:
- a divalent, linear or branched, alkyl radical, comprising from 1 to 10 carbon atoms;
- -[C_{y}H_{2y})Z]ₚ-, wherein Z is connected to S_{q}, S_{w-q}, R or R' and wherein:
   - y is a number from 1 to 5;
   - Z is chosen from -O-, -S-, -COO-, -Si(R"R"')- and -CONH-, wherein R" and R‴ are independently selected from alkyl or alkoxy groups comprising from 1 to 10 carbon atoms;
   - p is a number from 1 to 10;
- an aromatic divalent radical.

In some variations, the polymer has an average molecular weight Mn equal to or higher than 300 g/mol, preferably from 300 to 50 000, and more preferably from 500 to 10 000 g/mol.

In some variations, R or R' are independently chosen from a hydrogen atom, a perfluoroalkyl group comprising at least 5 fluorine atoms, an azide group, a cyano group, a hydroxy group, an amine group, an acid group, a silyl group, a urea group, a thiourea group, and an ester group.

In some variations, X or X' are independently chosen from -(CH₂)₂-, -[(CH₂)₂O]ₚ-, -[(CH₂)₂S]ₚ- or a phenyl divalent radical.

In some variations, the at least one fluorinated monomer is chosen from vinylidene fluoride, trifluoroethylene, vinyl fluoride, tetrafluoroethylene, hexafluoropropylene, hexafluorobutadiene, chlorotrifluoroethylene, bromotrifluoroethylene, perfluoropropylvinylether, perfluoromethylvinylether, 2,3,3,3-tetrafluoropropene, 2-trifluoromethacrylic acid, alkyl 2-trifluoromethacrylate, α-fluoroacrylic acid, alkyl α-fluoroacrylate, α,β-difluoroacrylic acid, alkyl α,β-difluoroacrylate, β,β-difluoroacrylic acid, alkyl β,β-difluoroacrylate, α,β,β-trifluoroacrylic acid, alkyl α,β,β-trifluoroacrylate, 1,1,1-trifluoro-2-trifluoromethyl-prop-2-ene, perfluorobutadiene and their combinations, and wherein the at least one fluorinated monomer preferably comprises vinylidene fluoride.

In some variations, the polymer has a molar ratio of terminal groups R-X-S_{q}- or -S_{w-q}-X'-R' to total terminal groups from 40 to 100 %, and preferably from 70 to 100 %.

The present invention makes it possible to overcome the drawbacks of the prior art. In particular, the invention provides a method for the preparation of telechelic fluorinated polymers that makes it possible to obtain such polymers with a high chain-end functional content. The invention also provides a method for the preparation of telechelic fluorinated polymers that makes it possible to obtain a variety of polymers with different end-functions without the need of post-functionalization.

This is achieved by the method according to the present invention. More particularly, this is achieved by the use of the polysulfide chain transfer agent of formula (I), which due to the S-S bond, makes it possible to obtain a high molar ratio of functional groups terminal groups, notably higher than 40 %. This polymerization process is controlled by the presence of the functional polysulfide which provides the functional end groups and makes it possible to control the molecular weight of the obtained polymer. Thus, it is possible to use such telechelic polymers (or oligomers) to efficiently prepare polymer resins.

In addition, the presence and nature of the groups R and R' in the chain transfer agent makes it possible to obtain a variety of polymers comprising different end-functions, without the need of post-functionalization.

Advantageously, the absence of any surfactants makes it possible to avoid high persistency, toxicity, and time and energy consuming purification processes of the final products.

Still advantageously, the method according to the present invention is carried out under thermal conditions which, in contrast with photochemical conditions, enables the synthesis to be implemented in an autoclave. In other words, these conditions allow the implementation of this method on a larger scale and at a high monomer pressure, facilitating the industrialization of the process.

### Description of embodiments

The invention will now be described in more details without limitation in the following description.

### Polymerization method

The method according to the present invention is used for the polymerization of at least one fluorinated monomer comprising an ethylene bond. By *"fluorinated monomer"* is meant a monomer comprising at least one fluorine atom.

The method according to the invention makes it possible to prepare a telechelic fluoropolymer. By *"telechelic polymer"* is a α,ω-difunctional polymer or in other words a di-end-functional polymer where both ends possess the same functionality.

The fluorinated monomer may be chosen from vinylidene fluoride (VDF), vinyl fluoride (VF), trifluoroethylene (TrFE), tetrafluoroethylene (TFE), hexafluoropropylene (HFP), hexafluorobutadiene, trifluoropropenes such as 3,3,3-trifluoropropene, tetrafluoropropenes such as 2,3,3,3-tetrafluoropropene (HFO-1234yf) or 1,3,3,3-tetrafluoropropene (HFO-1234ze), 1,1,1-trifluoro-2-trifluoromethyl-prop-2-ene (hexafluoroisobutylene, HFIB), perfluorobutylethylene, pentafluoropropenes such as 1,1,3,3,3-pentafluoropropene or 1,2,3,3,3-pentafluoropropene, perfluoroalkylvinylethers such as perfluoropropylvinylether (PPVE) and perfluoromethylvinylether (PMVE), 2-trifluoromethacrylic acid (MAF), alkyl 2-trifluoromethacrylate, α,β-difluoroacrylic acid, alkyl α,β-difluoroacrylate, β,β-difluoroacrylic acid, alkyl β,β-difluoroacrylate, α,β,β-trifluoroacrylic acid, alkyl α,β,β-trifluoroacrylate, esters of 3,3-difluoro-2-(trifluoromethyl)acrylate, fluoroesters of 3,3-difluoro-2-(trifluoromethyl)acrylate, esters of (Z/E)-3-fluoro-2-(trifluoromethyl)acrylate, fluoroesters of (Z/E)-3-fluoro-2-(trifluoromethyl)acrylate, α-fluoroacrylates, α-fluoroacrylic acid esters and their combinations.

Optionally, the fluorinated monomer can also comprise other halogens (other than fluorine) such as chlorine, bromine, and iodine. Such fluorinated monomers can be chosen from iodotrifluoroethylene (ITFE), bromotrifluoroethylene (BrTFE), chlorofluoroethylene (CFE), chlorotrifluoroethylene (CTFE) and chlorotrifluoropropene. Chlorofluoroethylene can be either 1-chloro-1-fluoroethylene, or 1-chloro-2-fluoroethylene (Z and E). Chlorotrifluoropropene can be either 1-chloro-3,3,3-trifluoropropene or 2-chloro-3,3,3-trifluoropropene, 2-bromo-3,3,3-trifluoropropene, 2-iodo-3,3,3-trifluoropropene.

More preferably, the fluorinated monomer can be chosen from vinylidene fluoride, trifluoroethylene, vinyl fluoride, tetrafluoroethylene, hexafluoropropylene, hexafluorobutadiene, chlorotrifluoroethylene, bromotrifluoroethylene, perfluoropropylvinylether, perfluoromethylvinylether, 1,1,1-trifluoro-2-trifluoromethyl-prop-2-ene, 2,3,3,3-tetrafluoropropene, 2-trifluoromethacrylic acid, alkyl 2-trifluoromethacrylate, α,β-difluoroacrylic acid, alkyl α,β-difluoroacrylate, β,β-difluoroacrylic acid, alkyl β,β-difluoroacrylate, α,β,β-trifluoroacrylic acid, alkyl α,β,β-trifluoroacrylate, perfluorobutadiene, as well as their combinations.

According to preferred embodiments, the at least one fluorinated monomer is vinylidene fluoride.

According to other embodiments, the at least one fluorinated monomer is a mixture of vinylidene fluoride with at least one other fluorinated monomer such as for example hexafluoropropylene and/or perfluoromethylvinylether.

In addition, at least one comonomer may be present during the polymerization method. Such a comonomer may be chosen from non-fluorinated comonomers such as a styrene comonomer, a (alkyl)acrylic comonomer, and their combinations. The term *"(alkyl)acrylic"* includes the terms acrylic and alkyl acrylic. Preferably, the alkyl acrylic monomer is a methacrylic monomer.

The non-fluorinated styrene comonomer can be chosen from styrene, α-methyl styrene, β-methyl styrene (2 or 3 or 4 and combinations thereof), acetoxystyrene, benzhydrylstyrene, styrene halide (iodo, chloro, bromo, fluoro), alkoxy styrenes, (alkyl/aryl phosphino) styrenes, vinyl acetate, vinyl benzoate, vinyl benzoic acid salts.

The non-fluorinated (alkyl)acrylic comonomer can be chosen for example from (alkyl)acrylic acid, (alkyl)acrylamides, (alkyl)acrylonitriles, (alkyl)acrylates, as well as their combinations. Such monomers can be chosen from (alkyl)acrylic acid, (alkyl)acrylate monomers having an alkyl group preferably from 1 to 22 carbon atoms, saturated or unsaturated, linear, branched or cyclic which can comprise at least one heteroatom (O, S).

Examples of non-fluorinated (alkyl)acrylic comonomers include (alkyl)acrylic acid, methyl (alkyl)acrylate, ethyl (alkyl)acrylate, n-propyl (alkyl)acrylate, isopropyl (alkyl)acrylate, allyl (alkyl)acrylate, n-butyl (alkyl)acrylate, isobutyl (alkyl)acrylate, t-butyl (alkyl)acrylate, n-hexyl (alkyl)acrylate, n-octyl (alkyl)acrylate, isooctyl (alkyl)acrylate, 2-ethylhexyl (alkyl)acrylate, n-decyl (alkyl)acrylate, isodecyl (alkyl)acrylate, lauryl (alkyl)acrylate, tridecyl (alkyl)acrylate, C12-C14 alkyl (alkyl)acrylate, n-octadecyl (alkyl)acrylate, C16-C18 alkyl (alkyl)acrylate, cyclohexyl (alkyl)acrylate, t-butyl cyclohexyl (alkyl)acrylate, 3,3,5-trimethyl cyclohexyl (alkyl)acrylate, isobornyl (alkyl)acrylate, glycidyl methacrylate, benzyl methacrylate, 3-sulfopropyl methacrylate potassium salt, methacroylcholine chloride, 3-(trimethoxysilyl)propyl methacrylate, 2,2,6,6-tetramethyl 4-piperidyl methacrylate, 2-[2-hydroxy-5-[2-(methacryloyloxy)- ethyl]phenyl]-2H-benzotriazole, polyethylene glycol diacrylate, bisphenol A dimethacrylate, mono-bis(2-acryloyloxyethyl) succinate, pentaerythritol tetraacrylate, 1,3,5-triacryloylhexahydro-1,3,5-triazine, trimethylolpropane trimethacrylate, tris(2-acryloyloxyethyl) isocyanurate and combinations thereof.

Particularly preferred compounds are methyl (meth)acrylate, ethyl (meth)acrylate, butyl (meth)acrylate, 2-ethylhexyl (meth)acrylate.

Further possible other comonomers include alkyl vinyl phosphonates, vinyl phosphonic acid, vinyl ketones, isoprene, butadiene, terpenes, vinyl imidazoles, alkyl vinyl ammonium halides, vinyl carbazoles, vinyl pyrrolidones, vinyl sulfonates salts, vinylferrocenes, vinyl phthalimides, vinyl caprolactams, vinyl pyridines, vinyl silanes, vinyl siloxanes and combinations thereof.

According to some embodiments, the method according to the invention is used to polymerize only one fluorinated monomer, preferably vinylidene fluoride monomer, in order to obtain a telechelic homopolymer, and preferably a telechelic PVDF homopolymer.

According to other embodiments, the invention is used to polymerize at least two different fluorinated monomers in order to form a copolymer. By *"copolymer"* is meant a polymer comprising units deriving from at least two different monomers. Thus, terpolymers are also included in the above definition.

In this case, it is preferable that one of the at least two different fluorinated monomers is a VDF monomer with at least one other fluorinated monomer and optionally with at least one comonomer from the list described above.

In case the polymerization method is used to polymerize at least one fluorinated monomer with at least one comonomer, the molar ratio of fluorinated monomers to the comonomers can be from 0.01 to 99 %, and preferably from 50 to 99 %. For example, this ratio may be from 0.01 to 1 %; or from 1 to 5 %; or from 5 to 10 %; or from 10 to 20 %; or from 20 to 30 %; or from 30 to 40 %; or from 40 to 50 %; or from 50 to 60 %; or from 60 to 70 %; or from 70 to 80 %; or from 80 to 90 %; or from 90 to 99 %.

In case the polymerization method is used to polymerize VDF and at least one second fluorinated monomer, the molar ratio of VDF monomers to the other monomers can be from 0.01 to 99 %, and preferably from 0.1 to 50 %. For example, this ratio may be from 0.01 to 1 %; or from 1 to 5 %; or from 5 to 10 %; or from 10 to 20 %; or from 20 to 30 %; or from 30 to 40 %; or from 40 to 50 %; or from 50 to 60 %; or from 60 to 70 %; or from 70 to 80 %; or from 80 to 90 %; or from 90 to 99 %.

The above monomers are put in contact with a polymerization initiator, the chain transfer agent, and optionally a solvent.

The polymerization initiator can be chosen from a peroxide, a hydroperoxide, a persulfate, a percarbonate, a peroxycarbonate, a peracid, a perester, as well as their mixtures.

According to preferred embodiments, the polymerization initiator may be chosen from ammonium persulfate, potassium persulfate, sodium persulfate, hydrogen peroxide, hydrogen peroxide/ascorbic acid, hydrogen peroxide/urea adduct, *tert-*butyl peroxide, *tert*-butyl hydroperoxide, *tert*-amyl hydroperoxide, bis(*tert*-butyl cyclohexyl)peroxidicarbonate, cumyl peroxide, cumyl hydroxyperoxide, di-isopropylbenzene hydroperoxide, *tert*-butyl peroxypivalate, *tert*-amyl peroxypivalate *tert*-butyl peroxide, peracetic acid, sodium percarbonate, potassium percarbonate, ammonium percarbonate. More preferably, the polymerization initiator is chosen from *tert*-butylperoxy pivalate and *tert*-amyl peroxypivalate.

According to some embodiments, a metal catalyst such iron, manganese, copper, zinc with ligands such as EDTA, polyamines and polypyridines can be added to any of the above polymerization initiators.

The polymerization initiator may be added at a content from 0.03 to 5 mol % and preferably from 0.1 to 2 mol % relative to the sum of monomers (fluorinated monomers and/or comonomers) to be polymerized. This content may be from 0.03 to 0.1 mol %; or from 0.1 to 0.5 mol %; or from 0.5 to 1 mol %; or from 1 to 1.5 mol %; or from 1.5 to 2 mol %; or from 2 to 2.5 mol %; or from 2.5 to 3 mol %; or from 3 to 3.5 mol %; or from 3.5 to 4 mol %; or from 4 to 4.5 mol %; or from 4.5 to 5 mol %.

In the case of the present invention, the polymerization is initiated by the polymerization initiator that reacts with the fluorinated monomer. The formed radical species will react with the other monomers in order to create a macroradical. This latter will then react onto the chain transfer agent, which further generates a functional chain-end and a new radical. Thus, in the case of the present invention, the polymerization is initiated by the polymerization initiator and not by irradiation (photochemical conditions). Accordingly, in preferred embodiments, the reaction mixture is not subjected to irradiation.

The chain transfer agent has the formula (I):

(I) R-X-(S)_{w}-X'-R'

In other words, the chain transfer agent is a polysulfide compound. The S-S bond is weak and strongly interacts with radicals because of its high transfer constant. This will reduce the hydrogen transfer reaction from the solvent or by backbiting, leading to a considerable increase of chain-end functionality.

w is an integer. w varies from 2 to 10. Preferably, w is 2 so that the chain transfer agent is a disulfide.

R and R' are independently chosen from a hydrogen atom, perfluoroalkyl group preferably comprising at least 5 fluorine atoms, a hydroxy group, an amine group, an acid group, an ester group, a thioester group, an amide group, an azide group, a urea group, a carbonate group, a thiocarbonate group, a cyclocarbonate group, an ether group, a thioether group, a cyano group, a silyl group and an aromatic group.

By *"perfluoroalkyl group"* is meant a -CₘF₂ₘ₊₁ group, wherein m is preferably from 2 to 10.

By *"hydroxy group"* is meant a -OH group.

By *"amine group"* is meant a -NR¹R²R³ group wherein R¹, R² and R³ can be independently chosen from a hydrogen atom or an alkyl group comprising from 1 to 10 carbon atoms. The alkyl group may be linear or branched. In other words, the amine group may be chosen from a primary amine, or a secondary amine, or a tertiary amine.

By *"acid group"* is meant a -COOH group.

By *"ester group"* is meant a -COOR⁴ group, wherein R⁴ can be chosen from an alkyl group comprising from 1 to 10 carbon atoms. The alkyl group may be linear or branched.

By *"thioester group"* is meant a -COSR⁴ group.

By *"amide group"* is meant a -CONR¹R²R³ group.

By *"azide group"* is meant a -N₃ group.

By *"urea group"* is meant a -NR¹CONR²R³ group.

By *"cyano group"* is meant a -CN group.

By *"carbonate group"* is meant a -OCOOR⁵ group, wherein R⁵ can be chosen from an alkyl group comprising from 1 to 10 carbon atoms. The alkyl group may be linear or branched. R⁵ can be a monovalent, divalent, or trivalent cation, related to the counter ion of the carboxylate anions, such as Li, Na, K, Cs, Mg, Zn and Fe.

By *"thiocarbonate group"* is meant a group chosen from -OCOSR⁵ and -OCSSR⁵.

By *"cyclocarbonate group"* is meant a group of formula (II): 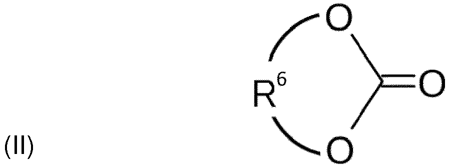 wherein R⁶ is a biradical alkyl group comprising from 2 to 7 carbon atoms with or without heteroatom's linkages such as ethers or thioethers, and preferably from 2 to 5 carbon atoms, and wherein the cyclocarbonate group is connected to -X- via the R⁶ group.

The *"aromatic group"* can comprise one or more rings, and optionally comprise one or more heteroatoms such as oxygen, sulfur or nitrogen. The or each aromatic ring may be a five-member ring or a six-member ring or a seven-member ring or an eight-member ring, preferably a five or a six-member ring. The aromatic group may further be substituted by one or more substituents independently chosen from a halogen, or an alkyl group comprising from 1 to 10 carbon atoms or cyano group or an alkoxy or sulfoxy group. According to preferred embodiments, the aromatic group may be an imidazole, a triazole, a benzimidazole, or a benzotriazole.

By *"silyl group"* is meant a -SiR⁷R⁸R⁹ group, wherein R⁷, R⁸ and R⁹ are independently selected from linear or branched alkyl and alkoxy groups comprising from 1 to 10 carbon atoms, preferably from 1 to 4 carbon atoms. In some embodiments, R⁷, R⁸ and R⁹ are alkyl groups. In other embodiments, R⁷, R⁸ and R⁹ are alkoxy groups.

According to preferred embodiments, R and R' may independently be chosen from a hydrogen atom, a hydroxy group, an amine group, an acid group, a fluoroalkyl group, a silyl group, a urea group, a thiourea group, an azide group, a cyano group, and an ester group.

According to some embodiments, R and R' are different.

According to preferred embodiments, R and R' are identical.

X and X' may be divalent radicals independently chosen from a divalent, linear or branched, alkyl radical, comprising from 1 to 10 carbon atoms, - [(CH₂)_{y})Z]ₚ- or an aromatic divalent radical. By *"divalent radical"* is meant in the context of the present invention, a group which is connected to other groups (in this case connected to R on the one hand and S on the other hand) via two chemical bonds.

More particularly, according to preferred embodiments the divalent alkyl radical is linear and is preferably a -(CH₂)ₙ- group. In this case, n may be a number from 1 to 10, and preferably from 1 to 5. According to some preferred embodiments, n may be 2 so that X and/or X' may be -(CH₂)₂-.

y is a number from 1 to 5, and preferably from 1 to 4.

Z is chosen from -O-, -S-, -COO-, -Si(R"R‴)- and -CONH-. R" and R‴ may be identical or different. They are independently selected from linear or branched alkyl or alkoxy groups comprising from 1 to 10 carbon atoms, preferably from 1 to 4 carbon atoms. In some embodiments, R" and R‴ are alkyl groups. In other embodiments R" and R‴ are alkoxy groups.

According to preferred embodiments, Z is -O-.

According to some embodiments, Z is connected to the -(S)_{w}- group.

According to other embodiments, Z is connected to the -R or R' group.

p is a number from 1 to 10 and preferably from 1 to 5.

According to some preferred embodiments, y is 2 and Z is -O- so that X is -[(CH₂)₂O]ₚ-.

According to some embodiments, -[(CH₂)_{y})Z]ₚ- may be branched.

By *"aromatic divalent radical"* is meant an aromatic group comprising one or more rings, and optionally comprising one or more heteroatoms such as oxygen, sulfur or nitrogen. The aromatic ring may be a five-member or a six-member ring or a seven-member ring or an eight-member ring. It is preferably a five-member or a six-member ring. The aromatic divalent biradical may further be substituted by one or more substituents independently chosen from a halogen, or an alkyl group comprising from 1 to 10 carbon atoms. According to preferred embodiments, the aromatic divalent radical may be a phenyl divalent radical substituted in ortho, meta, para or any possible combination, or not substituted. The substituent can be an amine group, an ester group, an ether group, a cyano group, a thioether group, a urea group, a thiourea group, a sulfonic acid group, a sulfonic ester group, a sulfonamide group, a carboxylic acid group, or a hydroxyl group.

In case the aromatic divalent radical is a phenyl divalent radical, R and S may be connected to ortho, meta or para positions relative to each other.

According to preferred embodiments, X and/or X' may independently be chosen from -(CH₂)₂-, -[(CH₂)₂O]ₚ-, -[(CH₂)₂S]ₚ- or a phenyl divalent radical.

According to some embodiments, X and X' are different.

According to preferred embodiments, X and X' are identical.

In some preferred embodiments, X=X' and R=R', so that the chain transfer agent is a symmetrical molecule.

According to preferred embodiments, the chain transfer agent may be chosen from propyl disulfide, 3,3'-dithiodipropionic acid and cystamine dihydrochloride.

The chain transfer agent may be added at a content from 0.1 to 30 mol %, and preferably from 1 to 10 mol %, relative to the sum of monomers (fluorinated monomers and/or comonomers) to be polymerized. This content may be from 0.1 to 1 mol %; or from 1 to 5 mol %; or from 5 to 10 mol %; or from 10 to 15 mol %; or from 15 to 20 mol %; or from 20 to 25 mol %; or from 25 to 30 mol %.

The first step can be carried out in the presence of a solvent. The solvent can be chosen from water, methanol, ethanol, butanol, isobutanol, sec-butanol, tert-butanol, isopentanol, pentanol, acetonitrile, benzonitrile, butyronitrile, propionitrile, methyl acetate, ethyl acetate, dimethylcarbonate, propylene carbonate, ethylene carbonate, acetone, cyclohexanone, cyclopentanone dimethylacetamide, N,N-dimethylformamide, N-methyl-2-pyrrolidone, N-formylmorpholine, trimethyl phosphate, triethyl phosphate, hexamethylphosphoramide, dimethyl sulfoxide, N,N'-dimethylpropyleneurea, acetic acid, methyl ethyl ketone, dichloromethane, 1.2 dichloroethane, or fluorinated solvents such as 1,1,1,3,3-pentafluorobutane, 1-chloro-2,2-difluoroethane, trifluorotoluene, hexafluorobenzene and perfluorocyclohexane, 1-chloro-1,1 difluoroethane, supercritical CO₂.

Other compounds, such as a co-solvent in case of mono or biphasic polymerizations, a wax, a non-fluorinated surfactant (sodium dodecyl sulfate or SDS, cetyl ammonium halide, poly(acrylic acid), aromatic polyethylene oxide surfactants such as Triton^{™} X-100, Triton^{™} N-101, Triton^{™} X-114, Triton^{™} X-405, Triton^{™} X-45, polyethylene oxide furan surfactants such as TWEEN^{®} 20, TWEEN^{®} 40, TWEEN^{®} 60, TWEEN^{®} 65, TWEEN^{®} 80, TWEEN^{®} 85, sugar surfactants such as Span^{®} 20, Span^{®} 60, Span^{®} 65, Span^{®} 80, Span^{®} 85, polyethylene and/or polypropylene surfactants such as Brij^{®} 58, Brij^{®} O10, BRIJ^{®} O20, Brij^{®} L4, Brij^{®} S 100, Brij^{®} L23, Brij^{®} 93, Brij^{®} C10, Brij^{®} S20), in order to increase latex stability or regulate pH.

In some embodiments, the polymerization initiator can be transferred to a reactor (preferably together with a solvent as described above), then the monomers (fluorinated monomers and comonomers) can be introduced (all together or each type of monomer separately), and then the chain transfer agent can be gradually introduced after heating the reactor at the desired temperature.

Alternatively, all reactants can be transferred into the reactor that can be further heated at the desired temperature.

Again alternatively, the initiator and the chain transfer agent can be transferred to a reactor, and then the fluorinated monomers may be added continuously or in one batch to the reaction medium for example at a specific temperature.

Alternatively, and in case more than one fluorinated monomers (and/or comonomers) are used, each type of monomers is added separately into the mixture comprising the chain transfer agent and the polymerization initiator. For example, a first type of fluorinated monomers can first be added to the mixture, followed by the addition of a second type of fluorinated monomers. Alternatively, some type of fluorinated monomers can be added simultaneously to the mixture comprising the chain transfer agent and the polymerization initiator, followed by the addition of a second type of fluorinated monomers and then heating.

Alternatively, a given fluorinated monomer may be added to the mixture at two or more points in time, or continuously over a certain period of time.

The method of the present invention may preferably be carried out without surfactants such as ammonium perfluorooctanoate (APFO), perfluorooctanoic acid (PFOA), perfluorooctanesulfonic acid (PFOS), ammonium 4,8-dioxa-3H-perfluorononanoate ADONA^{®} (commercialized by Dyneon), POLYFOX^{®} (produced by Omnova), TIVADA^{®} (marketed by Merck), and GenX (having the formula C₃F₇OCF(CF₃)CO₂H, commercialized by Chemours). More preferably, the method is carried out in the absence of any surfactant.

The polymerization reaction can preferably be performed at a temperature ranging from 30 to 150°C, more preferably from 60 to 120°C and even more preferably from 65 to 110°C. This temperature may also depend on the half-life of the polymerization initiator. The temperature may remain constant for a period of time ranging from 1 minute to 24 hours, and preferably from 30 minutes to 5 hours, in order to complete the polymerization reaction. In some embodiments, the monomers may be introduced into the reactor at ambient temperature. In other embodiments, they may be introduced at a lower temperature, for instance from - 196°C to 0°C. Different introduction temperatures may be used for the different monomers. The temperature during the second addition may be higher, or lower (and preferably lower) than the temperature during the first addition. For example, the first addition may be carried out at a temperature from -50 to 0°C, then the temperature can decrease in order to reach a temperature from -196 to -50°C. It goes without saying that the same applies in case more than two additions are carried out. The temperature may then be raised to the desired polymerization reaction temperature.

The polymerization can be achieved under constant or variable pressure. Thus, the method according to the present invention can be carried out under a pressure ranging from 5 to 100 bars, more preferably between 10 and 70 bars.

Preferably, the method according to the present invention may be carried out under oxygen free atmosphere for example under nitrogen, argon, or vinylidene difluoride atmosphere. By *"vinylidene difluoride atmosphere"* is meant that the autoclave is saturated with VDF gas.

In addition, the method according to the present invention can be carried out in a solution, a suspension or an emulsion, in conventional solvents or in supercritical fluids.

The method according to the present invention can be carried out in an autoclave. Alternatively, the radical polymerizations can be performed in thick borosilicate Carius tubes (by way of exemplary dimensions: length = 130 mm, internal diameter = 10 mm, thickness = 2.5 mm, total volume = 8 mL). For example, the different reactants including the chain transfer agent, the polymerization initiator and optionally the solvent, can be added in the tube. The tubes may then be degassed by at least four thaw-freeze cycles, and the required amount of the monomers may then be transferred via a special manifold from an intermediate cylinder from which the drop of pressure was beforehand calibrated with the amount (in g) of the gaseous monomer. The tubes can be sealed under dynamic vacuum at the temperature of liquid nitrogen. Then, they may be inserted into a heated and shaken apparatus regulated at the desired temperature. The polymerization reaction may then be carried out for the desired period at constant temperature.

According to some embodiments, the method according to the invention may comprise one or more purification steps. Such steps include common purification methods for the skilled person, such as washing, precipitation, filtering, and drying.

### Fluorinated polymer

The fluorinated polymer obtained according to the above method is a telechelic polymer (as defined above).

The fluorinated polymer according to the present invention is preferably an oligomer. By *"oligomer"* is meant a polymer comprising a number of units which is equal to or less than 70, and preferably equal to or less than 30.

The fluorinated polymer comprises units deriving from fluorinated monomers and optionally units deriving from one or more other comonomers (and as described above). In addition, the fluorinated polymer of the present invention at least partially comprises a functional terminal group (this group deriving from the chain transfer agent and being as described above). More specifically, the functional polymer obtained according to the above method has a statistical distribution with at least a part of the polymers of the statistical distribution comprising at least one functional terminal group. The individual polymer molecules may for example comprise one functional terminal group -S_{q}-X-R (wherein q is a number from 1 to 7) and a second functional terminal group -S_{w}-_{q}-X'-R' (w being as defined above), or a first functional terminal group chosen from -S_{q}-X-R and -S_{w-q}-X'-R' and a second terminal group formed for example after a hydrogen transfer from the medium (for example from the solvent) to the fluorinated polymer, or by backbiting (hydrogen transfer from the polymeric chain that may induce branching) from the polymeric chain and induced branching and 3D networks formation.

The functional groups -S_{q}-X-R and -S_{w-q}-X'-R' may be identical or different.

The fluorinated polymer may have a molar ratio of terminal functional groups (-S_{q}-X-R and/or -S_{w-q}-X'-R') to total terminal groups from 40 to 100 %, and preferably from 70 to 100 %. This ratio is calculated by NMR spectroscopy.

The fluorinated polymer may have a number-average molecular weight, Mn, equal to or higher than 300 g/mol, preferably from 300 to 50 000 g/mol, and more preferably from 500 to 10 000 g/mol. For example, the fluorinated polymer may have a molecular weight from 300 to 500 g/mol; or from 500 to 1500 g/mol; or from 1500 to 15000 g/mol; or from 15000 to 30 000 g/mol; or from 30 000 to 35 000 g/mol; or from 35 000 to 40 000 g/mol; or from 40 000 to 45 000 g/mol; or from 45 000 to 50 000 g/mol; or from 50 000 to 55 000 g/mol; or more than 55 000 g/mol.

The molecular weight of the fluorinated polymer is measured by ¹⁹F or¹H NMR spectroscopy. It can be calculated from the integrals of the specific signals of fluorinated (or characteristic hydrogenated) units and end groups, or by MALDI-TOF spectrometry (for molar mass lower than 8,000) and by physical analysis such as size exclusion chromatography and viscosity.

According to some embodiments, the fluorinated polymer of the present invention is a homopolymer comprising units deriving from a single fluorinated monomer, preferably chosen from VDF, VF, TrFE, TFE, TFP, CTFE, BrTFE, ITFE, HFO-1234yf, and CFE monomers, and which is more preferably a VDF monomer.

According to other embodiments, the fluorinated polymer of the present invention is a copolymer comprising units deriving from at least two different fluorinated monomers (and optionally one or more comonomers), the fluorinated monomers preferably being chosen from VDF, VF, HFP, PMVE, TrFE, TFE, TFP, CTFE, BrTFE, ITFE, HFO-1234yf, HFO-1234ze, PPVE, CFE, MAF, MAF-ester, hexafluorobutadiene, α-fluoroacrylic acid, alkyl α-fluoroacrylate, α, β-difluoroacrylic acid, alkyl α, β-difluoroacrylate, β,β-difluoroacrylic acid, alkyl β, β-difluoroacrylate, α, β, β-trifluoroacrylic acid, alkyl α, β,β-trifluoroacrylate and HFIB monomers. Preferably, one of the at least two different fluorinated monomers is a VDF monomer.

According to preferred embodiments, in case the fluorinated polymer is a copolymer: it can be a poly(VDF-*co*-HFP) copolymer, or a poly(VDF-*co*-VF) copolymer, or a poly(VDF-*co*-PMVE) copolymer, or a poly(VDF-*ter*-HFP-*ter-*PMVE) copolymer, or a poly(VDF-*co*-TFE) copolymer, or a poly(VDF-*co*-TrFE) copolymer or a poly(VDF-*co*-CTFE) copolymer or a poly(VDF-*co*-BrTFE) copolymer or a poly(VDF-*co*-ITFE) copolymer or poly(VDF-*co*-HFIB) copolymer, poly(VDF-*co*-PPVE) copolymer, poly(VDF-*ter*-HFP-*ter*-CTFE) terpolymer or poly(VDF-*ter*-HFP-*ter*-TrFE) terpolymer or poly(VDF-*ter*-TrFE-*ter*-CTFE) terpolymer, or poly(VDF-*ter*-TrFE-*ter*-CFE) terpolymer or poly(VDF-*ter*-HFP-*ter-*BrTFE) terpolymer, or poly(VDF-*ter*-TrFE-*ter*-PPVE) terpolymer or poly(VDF-*ter-*TrFE-*ter*-PMVE) terpolymer, or poly(VDF-*ter*-TrFE-*ter*-MAF) terpolymer, or poly(VDF-*ter*-TrFE-*ter*-MAF-ester) terpolymer, or poly(VDF-*ter-*TrFE-*ter*-HFIB) terpolymer, or poly(VDF-*ter*-TrFE-*ter*-1234ze) terpolymer or poly(VDF-*ter*-TrFE-*ter*-1234yf) terpolymer, or poly(VDF-*ter*-HFP-*ter*-1234ze) terpolymer, or poly(VDF-*ter*-HFP-*ter*-1234yf) terpolymer, or poly(VDF-*ter*-CTFE-*ter*-1234ze) terpolymer, or poly(VDF-*ter*-CTFE-*ter*-1234yf) terpolymer, or poly(VDF-*ter-*BrTFE-*ter*-1234yf) terpolymer, or poly(VDF-*ter*-BrTFE-*ter*-1234ze) terpolymer, or poly(VDF-*ter*-HFP-*ter*-CFE) terpolymer, or poly(VDF-*ter*-HFP-*ter*-HFIB) terpolymer, or poly(VDF-*ter*-TrFE-*ter*-HFIB) terpolymer, or poly(VDF-*ter*-CTFE-*ter*-HFIB) terpolymer, or poly(VDF-*ter*-HFP-*ter*-MAF) terpolymer, or poly(VDF-*ter-*CTFE-*ter*-MAF) terpolymer, or poly(VDF-*ter*-BrTFE-*ter*-MAF) terpolymer and all other possible combinations.

In case the fluorinated polymer is a VDF copolymer, the content of units deriving from VDF monomers may be from 10 to 99 %, and preferably from 20 to 90 % by weight relative to the total weight of the polymer. For example, this content may be from 10 to 15 %; or from 15 to 30 %; or from 30 to 50%; or from 50 to 65%; or from 65 to 85 %; or from 85 to 90%; or from 90 to 95 %; or from 95 to 99 % by weight relative to the total weight of the polymer. This content can be measured by ¹⁹F NMR spectroscopy.

Consequently, in case the fluorinated polymer is a VDF copolymer, the content of units deriving from monomers (fluorinated monomers and optionally comonomers) other than the VDF monomers may be from 1 to 90 %, and preferably from 10 to 80 % by weight relative to the total weight of the polymer. For example, this content may be from 1 to 5 %; or from 5 to 10 %; or from 10 to 20 %; or from 20 to 30 %; or from 30 to 40 %; or from 40 to 50 %; or from 50 to 60 %; or from 60 to 70%; or from 70 to 80 %; or from 80 to 90% by weight relative to the total weight of the polymer. This content may concern one or more than one types of monomers other than the VDF monomers.

According to some embodiments, the fluorinated polymer according to the present invention may have a degree of crystallinity equal to or higher than 10 %, preferably from 10 to 65 %, and more preferably from 30 to 65 %. The crystallinity is measured by differential scanning calorimetry (DSC) using DSC200 F3 Maia system, from Netzsch. It corresponds to the percentage ratio *ΔHₘ* / *ΔH_{c}* wherein *ΔH_{c} =* 104.5 J.g⁻¹ corresponds to the enthalpy of fusion of a 100% crystalline PVDF and *ΔHₘ* is the enthalpy of fusion determined by DSC in J.g⁻¹.

According to other embodiments, notably in case of poly(VDF-*co-*fluorinated monomer other than VDF) copolymers, amorphous materials can be obtained. This is the case, for example, when the content of HFP (or PMVE or PPVE) in poly(VDF-co-HFP) copolymer is higher than 18-20 mol%.

The fluorinated functional polymer according to the present invention may have a degradation temperature equal to or higher than 100°C, preferably equal to or higher than 150°C, more preferably equal to or higher than 250°C. By *"degradation temperature"* is meant the temperature at which the polymer loses 5 % of its weight due to degradation. The degradation temperature can be measured by a thermogravimetric analysis (TGA) using Q50 equipment from TA Instruments under air and nitrogen atmosphere.

### EXAMPLES

The following examples illustrate the invention without limiting it.

tert-Butyl peroxypivalate (TBPPI) was used as a polymerization initiator.

propyl disulfide (A) and 3,3'-dithiodipropionic acid (B) were used as chain transfer agents.

All examples were carried out under nitrogen atmosphere.

### EXAMPLE 1:

The polymerization of VDF was performed from a purged solution comprising A and TBPPI in dimethyl carbonate as a solvent which was transferred into a vacuumed autoclave. The reactor was then cooled to ca. -100°C, and VDF gas were transferred (nA/nVDF = 0.056 (5.6 mol %), nTBPPI/nVDF = 0.006 (0.6 mol %)). Subsequently, the autoclave was warmed up to room temperature and then gradually heated to 75°C, while the reaction solution was mechanically stirred vigorously. After 8 hours, the pressure in the autoclave dropped from 30 to 27 bars. The autoclave was then cooled, immersed in a water-ice bath, then depressurized, and opened to air. The VDF conversion was 15 %. The reaction product was transferred to a round bottom flask and condensed under vacuum. The product was washed with pentane, then was left to dry at 60°C under vacuum (10⁻³ bar) overnight. The final product was recovered as a white powder (yield 10 %, 92 % of functional end chains). The polymer had an average molecular weight Mn of 630 g/mol.

### EXAMPLE 2:

According to the same procedure as in example 1, the polymerization of VDF was carried out from a purged solution comprising A, TBPPI and 1,1,1,3,3-pentafluorobutane as a solvent which was transferred into a vacuumed autoclave. The reactor was then cooled and then VDF was added at a temperature -100°C, nA/nVDF = 0.056 (5.6 mol %), nTBPPI/nVDF = 0.032 (3.2 mol %)). Subsequently, the autoclave was warmed up to room temperature and then to 60°C, while the reactor was mechanically stirred vigorously. After 60 hours, the pressure in the autoclave dropped from 16 to 12 bars. The autoclave was then cooled in a water-ice bath, depressurized by venting, and opened to air (conversion of VDF was 33 %). The reaction product was transferred to a round bottom flask and condensed under vacuum, then it was washed with pentane, then was left to dry at 60°C under vacuum (10⁻³ bar) overnight. The final product was recovered as a white powder (yield 30 %, 82 % of functional end chains being measured by ¹⁹F NMR spectroscopy). The polymer had an average molecular weight Mn of 570 g/mol.

### EXAMPLE 3:

As in previous examples, the polymerization of VDF performed from a purged solution comprising B, TBPPI and methanol as a solvent which was transferred into a vacuumed autoclave. The reactor was then cooled and then VDF was added at a temperature -100°C, nB/nVDF = 0.056 (5.6 mol %), nTBPPI/nVDF = 0.032 (3.2 mol %). Subsequently, the autoclave was warmed up to room temperature and then to 75°C, while the reactor was mechanically stirred vigorously. After 4 hours, the pressure in the autoclave dropped from 29 to 20 bars. The autoclave was then cooled in a water-ice bath, depressurized by venting, and opened to air (conversion of VDF = 29 %). The solvent was removed under vacuum. The resulting product was precipitated in ethanol and the product was left to dry at 60 °C under vacuum (10⁻³ bar) overnight. The final product was recovered as a white powder (yield 23 %, 47 % of functional end chains being measured by ¹⁹F NMR spectroscopy). The polymer had an average molecular weight Mn of 780 g/mol.

### EXAMPLE 4:

The polymerization of VDF was achieved from a purged solution comprising B, TBPPI and *tert*-butanol which was transferred into a vacuumed autoclave. The reactor was then cooled, then VDF was introduced at ca. -100°C (nB/nVDF = 0.056 (5.6 mol %), nTBPPI/nVDF = 0.032 (3.2 mol %)). The autoclave was warmed up to room temperature and then gradually heated to 95°C, while the reaction solution was mechanically stirred vigorously. After 2 hours, the pressure in the autoclave was reduced from 24 to 20 bars. The autoclave was then cooled, immersed in a water-ice bath, then depressurized by venting, and opened to air. (VDF conversion= 40 %) The solvent was removed under vacuum. The resulting product was precipitated from ethanol and the product was left to dry at 60°C under vacuum (10⁻³ bar) overnight. The final product was recovered as a white powder (yield 32 %, 93 % of functional end chains being measured by ¹⁹F NMR). The polymer had an average molecular weight Mn of 500 g/mol calculated with ¹⁹F NMR.

### EXAMPLE 5:

As in previous examples, the polymerization of VDF was carried out from a purged solution comprising B, TBPPI, and *tert*-butanol transferred into a vacuumed autoclave. The reactor was then cooled, and VDF gas was transferred (nB/nVDF = 0.11 (5.6 mol %), nTBPPI/nVDF = 0.006 (0.6 mol %)). Subsequently, the autoclave was warmed up to room temperature and then gradually heated to 95°C, while the reaction solution was mechanically stirred vigorously. After 4 hours, the pressure dropped from 24 to 20 bars. The VDF conversion was 20 %. The autoclave was then cooled, immersed in a water-ice bath, then depressurized, and opened to air. The reaction product was transferred to a round bottom flask and condensed under vacuum then precipitated from ethanol, filtered, and the product was left to dry at 60 °C under vacuum (10⁻³ bar) overnight. The final product, recovered as a white powder (yield 15 %), and had an average molecular weight Mn of 320 g/mol, and 97 % of functional end chains.

### EXAMPLE 6:

As in previous examples, the copolymerization of VDF and hexafluoropropene (HFP) was carried out from a purged solution comprising B, TBPPI, and *tert*-butanol transferred into a vacuumed autoclave. The reactor was then cooled, and HFP and VDF gases were transferred (nB/nVDF = 0.11 (5.6 mol %), nTBPPI/nVDF = 0.006 (0.6 mol %), nVDF:nHFP= 75:25 mol). Subsequently, the autoclave was warmed up to room temperature and then gradually heated to 95°C, while the reaction solution was mechanically stirred vigorously. After 4 hours, the pressure dropped from 31 to 24 bars. The autoclave was then cooled, immersed in a water-ice bath, then depressurized, and opened to air. The reaction product was transferred to a round bottom flask and condensed under vacuum then precipitated in ethanol, filtered, and the product was left to dry at 60 °C under vacuum (10⁻³ bar) overnight. The final product, recovered as a white wax (yield 51 %), and had an average molecular weight Mn of 500 g/mol, and 84 % of functional end chains.

### EXAMPLE 7:

As in previous examples, the copolymerization of VDF and perfluoromethyl vinyl ether (PMVE) was carried out from a purged solution comprising B, TBPPI, and tert-butanol transferred into a vacuumed autoclave. The reactor was then cooled, and then PMVE and VDF gases were transferred in it (nB/nVDF = 0.11 (5.6 mol %), nTBPPI/nVDF = 0.006 (0.6 mol %), nVDF:nPMVE= 80:20 mol). Subsequently, the autoclave was warmed up to room temperature and then gradually heated to 95°C, while the reaction solution was mechanically stirred vigorously. After 4 hours, the pressure dropped from 33 to 26 bars. The autoclave was then cooled, immersed in a water-ice bath, then depressurized, and opened to air. The reaction product was transferred to a round bottom flask and condensed under vacuum and then precipitated from methanol, filtered, and the product was left to dry at 60 °C under vacuum (10⁻³ bar) overnight. The final product, recovered as a white wax (yield 52 %), and had an average molecular weight Mn of 500 g/mol, and 84 % of functional chain- ends.

### EXAMPLE 8 (Scale-up test in 600 ml autoclave):

As in previous examples, the polymerization of VDF was carried out from a purged solution comprising B, TBPPI, and *tert*-butanol transferred into a vacuumed autoclave. The 600 mL-reactor was then cooled, and 88 g of VDF gas was transferred (nB/nVDF = 0.11 (5.6 mol %), nTBPPI/nVDF = 0.006 (0.6 mol %)). Subsequently, the autoclave was warmed up to room temperature and then gradually heated to 95°C, while the reaction solution was mechanically stirred vigorously. A slight exotherm had warmed the autoclave to 110°C. After 2 hours, the pressure dropped from 35 to 25 bars. The VDF conversion was 20 %. The autoclave was then cooled, immersed in a water-ice bath, then depressurized, and opened to air. The reaction product was transferred to a round bottom flask and condensed under vacuum. Then 700 ml of methanol was added and the solution was mixed for 2 hours. The obtained suspension was coagulated by adding 1 vol of water acidified with sulfuric acid (5 ml of sulfuric acid for every 150 ml of deionize water). The precipitate was filtered and the white product was left to dry at 60 °C under vacuum (10⁻³ bar) overnight. The final product, recovered as a white powder (yield 40 %), and had an average molecular weight Mn of 700 g/mol, and 86 % of functional end chains.

### EXAMPLE 9:

An etherification reaction of telechelic PVDF diacid was carried out as follows: 15.0 g of telechelic PVDF were added into a solution of 500 ml of methanol, containing 5ml of H₂SO₄, and stirred at 80 °C for 24h. Then, the product was coagulated by adding 500 ml of diionized water, acidified with 16 ml of H₂SO₄, to the suspension. The product was then filtered and left to dry at 60 °C under vacuum (10⁻³ bar) overnight yielding a white powder (yield 100%).

## Claims

1. A method of polymerizing at least one fluorinated monomer comprising an ethylene bond, the method comprising putting in contact the at least one fluorinated monomer with a polymerization initiator and a chain transfer agent, the chain transfer agent having the formula (I):
(I) R-X-(S)_{w}-X'-R'
wherein:
- w is a number ranging from 2 to 8;
- R and R' are independently chosen from a hydrogen atom, a perfluoroalkyl group, a hydroxy group, an amine group, an acid group, an ester group, a thioester group, an amide group, an azide group, a urea group, a carbonate group, a thiocarbonate group, a cyclocarbonate group, an ether group, a thioether group, a cyano group, a silyl group and an aromatic group; and
- X and X' are independently chosen from:
- a divalent, linear or branched, alkyl radical, comprising from 1 to 10 carbon atoms;
- -[C_{y}H_{2y})Z]ₚ-, wherein Z is connected to (S)_{w} or R or R' and wherein:
- y is a number from 1 to 5;
- Z is chosen from an -O-, -S-, -COO-, -Si(R"R‴)-and -CONH-, wherein R" and R‴ are independently selected from alkyl or alkoxy groups comprising from 1 to 10 carbon atoms;
- p is a number from 1 to 10;
- an aromatic divalent radical.

2. The method according to claim 1, wherein :
- R and R' are independently chosen from a hydrogen atom, a hydroxy group, a perfluoroalkyl group comprising at least 5 fluorine atoms, an amine group, an acid group, an azide group, a cyano group, a silyl group, a urea group, a thiourea group, and an ester group; and/or
- X and X' are independently chosen from -(CH₂)₂-, -[(CH₂)₂O]ₚ-, -[(CH₂)₂S]ₚ- or a phenyl divalent radical; and/or
- w is 2.

3. The method according to any one of claims 1 to 2, wherein the at least one fluorinated monomer is chosen from vinylidene fluoride, trifluoroethylene, vinyl fluoride, tetrafluoroethylene, hexafluoropropylene, hexafluorobutadiene, chlorotrifluoroethylene, bromotrifluoroethylene, perfluoropropylvinylether, perfluoromethylvinylether, 2,3,3,3-tetrafluoropropene, 2-trifluoromethacrylic acid, alkyl 2-trifluoromethacrylate, α-fluoroacrylic acid, alkyl α-fluoroacrylate, α, β-difluoroacrylic acid, alkyl α,β-difluoroacrylate, β,β-difluoroacrylic acid, alkyl β,β-difluoroacrylate, α,β,β-trifluoroacrylic acid, alkyl α,β,β-trifluoroacrylate, 1,1,1-trifluoro-2-trifluoromethyl-prop-2-ene, perfluorobutadiene and their combinations, and wherein the at least one fluorinated monomer preferably comprises vinylidene fluoride.

4. The method according to any one of claims 1 to 3, wherein the polymerization initiator is chosen from a peroxide, a persulfate, a percarbonate, a peracid, a peroxycarbonate, a perester, and preferably the polymerization initiator is a perester chosen from *tert-*butylperoxypivalate and *tert*-amylperoxypivalate.

5. The method according to any one of claims 1 to 4, wherein at least one further comonomer chosen from a styrene comonomer, a (alkyl)acrylic comonomer, an acrylic comonomer and combinations thereof is put into contact with the at least one fluorinated monomer, the polymerization initiator and the chain transfer agent.

6. The method according to any one of claims 1 to 5, comprising a first step of putting the chain transfer agent in contact with the polymerization initiator to form a mixture and a second step of putting this mixture in contact with the at least one fluorinated monomer.

7. The method according to any one of claims 1 to 6, wherein the polymerization is carried out at a temperature from 30 to 150 °C, more preferably from 60 to 120°C and even more preferably from 65 to 110°C.

8. The method according to any one of claims 1 to 8, wherein the polymerization is carried out in the absence of a surfactant.

9. A polymer comprising units of at least one fluorinated monomer and at least partially comprising R-X-S_{q}- and -S_{w-q}-X'-R' terminal groups wherein:
- w is a number from 2 to 8;
- q is a number from 1 to 7;
- R and R' are independently chosen from a hydrogen atom, a perfluoroalkyl group, a hydroxy group, an amine group, an acid group, an ester group, a thioester group, an amide group, an azide group, a urea group, a carbonate group, a thiocarbonate group, a cyclocarbonate group, an ether group, a thioether group, a cyano group, a silyl group and an aromatic group; and
- X and X' are independently chosen from:
- a divalent, linear or branched, alkyl radical, comprising from 1 to 10 carbon atoms;
- -[C_{y}H_{2y})Z]ₚ-, wherein Z is connected to S_{q}, S_{w-q}, R or R' and wherein:
- y is a number from 1 to 5;
- Z is chosen from -O-, -S-, -COO-, -Si(R"R"')- and -CONH-, wherein R" and R‴ are independently selected from alkyl or alkoxy groups comprising from 1 to 10 carbon atoms;
- p is a number from 1 to 10;
- an aromatic divalent radical.

10. The polymer according to claim 9 having an average molecular weight Mn, measured according to the method set out in the description, equal to or higher than 300 g/mol, preferably from 300 to 50 000, and more preferably from 500 to 10 000 g/mol.

11. The polymer according to claim 9 or 10, wherein R or R' are independently chosen from a hydrogen atom, a perfluoroalkyl group comprising at least 5 fluorine atoms, an azide group, a cyano group, a hydroxy group, an amine group, an acid group, a silyl group, a urea group, a thiourea group, and an ester group.

12. The polymer according to any one of claims 9 to 11, wherein X or X' are independently chosen from -(CH₂)₂-, -[(CH₂)₂O]ₚ-, -[(CH₂)₂S]ₚ- or a phenyl divalent radical.

13. The polymer according to any one of claims 9 to 12, wherein the at least one fluorinated monomer is chosen from vinylidene fluoride, trifluoroethylene, vinyl fluoride, tetrafluoroethylene, hexafluoropropylene, hexafluorobutadiene, chlorotrifluoroethylene, bromotrifluoroethylene, perfluoropropylvinylether, perfluoromethylvinylether, 2,3,3,3-tetrafluoropropene, 2-trifluoromethacrylic acid, alkyl 2-trifluoromethacrylate, α-fluoroacrylic acid, alkyl α-fluoroacrylate, α, β-difluoroacrylic acid, alkyl α, β-difluoroacrylate, β,β-difluoroacrylic acid, alkyl β, β-difluoroacrylate, α,β,β-trifluoroacrylic acid, alkyl α,β,β-trifluoroacrylate, 1,1,1-trifluoro-2-trifluoromethyl-prop-2-ene, perfluorobutadiene and their combinations, and wherein the at least one fluorinated monomer preferably comprises vinylidene fluoride.

14. The polymer according to any one of claims 9 to 13, having a molar ratio of terminal groups R-X-S_{q}- or -S_{w-q}-X'-R' to total terminal groups from 40 to 100 %, and preferably from 70 to 100 %.

## Patentansprüche

1. Verfahren zum Polymerisieren zumindest eines fluorierten Monomers mit einer Ethylenbindung, wobei das Verfahren das Inkontaktbringen des zumindest einen fluorierten Monomers mit einem Polymerisationsinitiator und einem Kettentransfermittel umfasst, wobei das Kettentransfermittel die Formel (I) aufweist: (I) R-X-(S)_{w}-X'-R' wobei:
- w eine Zahl von 2 bis 8 ist;
- R und R' unabhängig aus einem Wasserstoffatom, einer Perfluoralkylgruppe, einer Hydroxygruppe, einer Amingruppe, einer Säuregruppe, einer Estergruppe, einer Thioestergruppe, einer Amidgruppe, einer Azidgruppe, einer Harnstoffgruppe, einer Carbonatgruppe, einer Thiocarbonatgruppe, einer Cyclocarbonatgruppe, einer Ethergruppe, einer Thioethergruppe, einer Cyanogruppe, einer Silylgruppe und einer aromatischen Gruppe ausgewählt sind; und
- X und X' unabhängig ausgewählt sind aus:
- einem zweiwertigen, linearen oder verzweigten Alkylradikal mit 1 bis 10 Kohlenstoffatomen;
- -[C_{y}-H_{2y})Z]ₚ-, wobei Z mit (S)_{w} oder R oder R' verbunden ist und wobei:
- y eine Zahl von 1 bis 5 ist;
- Z aus -O-, -S-, -COO-, -Si(R"R"')- und -CONH- ausgewählt ist, wobei R" und R‴ unabhängig aus Alkyl- oder Alkoxygruppen mit 1 bis 10 Kohlenstoffatomen ausgewählt sind;
- p eine Zahl von 1 bis 10 ist;
- einem aromatischen zweiwertigen Radikal.

2. Verfahren nach Anspruch 1, wobei:
- R und R' unabhängig aus einem Wasserstoffatom, einer Hydroxygruppe, einer Perfluoralkylgruppe mit zumindest 5 Fluoratomen, einer Amingruppe, einer Säuregruppe, einer Azidgruppe, einer Cyanogruppe, einer Silylgruppe, einer Harnstoffgruppe, einer Thioharnstoffgruppe und einer Estergruppe ausgewählt sind; und/oder
- X und X' unabhängig aus -(CH₂)₂-, -[(CH₂)₂O]ₚ-, -[(CH₂)₂S]ₚ- oder einem zweiwertigen Phenylradikal ausgewählt sind; und/oder
- w 2 ist.

3. Verfahren nach einem der Ansprüche 1 bis 2, wobei das zumindest eine fluorierte Monomer aus Vinylidenfluorid, Trifluorethylen, Vinylfluorid, Tetrafluorethylen, Hexafluorpropylen, Hexafluorbutadien, Chlortrifluorethylen, Bromtrifluorethylen, Perfluorpropylvinylether, Perfluormethylvinylether, 2,3,3,3-Tetrafluorpropen, 2-Trifluormethacrylsäure, Alkyl-2-trifluormethacrylat, α-Fluoracrylsäure, Alkyl-α-fluoracrylat, α,β-Difluoracrylsäure, Alkyl-α,β-difluoracrylat, β,β-Difluoracrylsäure, Alkyl-β,β-difluoracrylat, α,β,β-Trifluoracrylsäure, Alkyl-α,β,β-trifluoracrylat, 1,1,1-Trifluor-2-trifluormethyl-prop-2-en, Perfluorbutadien und Kombinationen davon ausgewählt ist, und wobei das zumindest eine fluorierte Monomer vorzugsweise Vinylidenfluorid umfasst.

4. Verfahren nach einem der Ansprüche 1 bis 3, wobei der Polymerisationsinitiator aus einem Peroxid, einem Persulfat, einem Percarbonat, einer Persäure, einem Peroxycarbonat, einem Perester ausgewählt ist und wobei vorzugsweise der Polymerisationsinitiator ein Perester ist, der aus *tert-*Butylperoxypivalat und tert-Amylperoxypivalat ausgewählt ist.

5. Verfahren nach einem der Ansprüche 1 bis 4, wobei zumindest ein weiteres Comonomer, das aus einem Styrolcomonomer, einem (Alkyl)acrylcomonomer, einem Acrylcomonomer und Kombinationen davon ausgewählt ist, mit dem zumindest einem fluorierten Monomer, dem Polymerisationsinitiator und dem Kettentransfermittel in Kontakt gebracht wird.

6. Verfahren nach einem der Ansprüche 1 bis 5, das einen ersten Schritt des Inkontaktbringens des Kettentransfermittels mit dem Polymerisationsinitiator unter Bildung eines Gemischs und einen zweiten Schritt des Inkontaktbringens dieses Gemischs mit dem zumindest einen fluorierten Monomer umfasst.

7. Verfahren nach einem der Ansprüche 1 bis 6, wobei die Polymerisation bei einer Temperatur von 30 bis 150 °C, mehr bevorzugt 60 bis 120 °C und noch mehr bevorzugt 65 bis 110 °C durchgeführt wird.

8. Verfahren nach einem der Ansprüche 1 bis 8, wobei die Polymerisation in Abwesenheit eines Tensids durchgeführt wird.

9. Polymer, umfassend Einheiten von zumindest einem fluorierten Monomer, und zumindest teilweise umfassend Endgruppen R-X-S_{q}- und -S_{w-q}-X'-R',
wobei:
- w eine Zahl von 2 bis 8 ist;
- q eine Zahl von 1 bis 7 ist,
- R und R' unabhängig aus einem Wasserstoffatom, einer Perfluoralkylgruppe, einer Hydroxygruppe, einer Amingruppe, einer Säuregruppe, einer Estergruppe, einer Thioestergruppe, einer Amidgruppe, einer Azidgruppe, einer Harnstoffgruppe, einer Carbonatgruppe, einer Thiocarbonatgruppe, einer Cyclocarbonatgruppe, einer Ethergruppe, einer Thioethergruppe, einer Cyanogruppe, einer Silylgruppe und einer aromatischen Gruppe ausgewählt sind; und
- X und X' unabhängig ausgewählt sind aus:
- einem zweiwertigen, linearen oder verzweigten Alkylradikal mit 1 bis 10 Kohlenstoffatomen;
- -[C_{y}H_{2y})Z]ₚ-, wobei Z mit S_{q}, S_{w-q}, R oder R' verbunden ist und wobei:
- y eine Zahl von 1 bis 5 ist;
- Z aus -O-, -S-, -COO-, -Si(R"R"')- und -CONH- ausgewählt ist, wobei R" und R‴ unabhängig aus Alkyl- oder Alkoxygruppen mit 1 bis 10 Kohlenstoffatomen ausgewählt sind;
- p eine Zahl von 1 bis 10 ist;
- einem aromatischen zweiwertigen Radikal.

10. Polymer nach Anspruch 9 mit einem durchschnittlichen Molekulargewicht Mn laut Messung gemäß dem in der Beschreibung ausgeführten Verfahren von mindestens 300 g/mol, vorzugsweise 300 bis 50.000 und mehr bevorzugt 500 bis 10.000 g/mol.

11. Polymer nach Anspruch 9 oder 10, wobei R und R' unabhängig aus einem Wasserstoffatom, einer Perfluoralkylgruppe mit zumindest 5 Fluoratomen, einer Azidgruppe, einer Cyanogruppe, einer Hydroxygruppe, einer Amingruppe, einer Säuregrupp, einer Silylgruppe, einer Harnstoffgruppe, einer Thioharnstoffgruppe und einer Estergruppe ausgewählt sind.

12. Polymer nach einem der Ansprüche 9 bis 11, wobei X und X' unabhängig aus -(CH₂)₂-, -[(CH₂)₂O]ₚ-, -[(CH₂)₂S]ₚ- oder einem zweiwertigen Phenylradikal ausgewählt sind.

13. Polymer nach einem der Ansprüche 9 bis 12, wobei das zumindest eine fluorierte Monomer aus Vinylidenfluorid, Trifluorethylen, Vinylfluorid, Tetrafluorethylen, Hexafluorpropylen, Hexafluorbutadien, Chlortrifluorethylen, Bromtrifluorethylen, Perfluorpropylvinylether, Perfluormethylvinylether, 2,3,3,3-Tetrafluorpropen, 2-Trifluormethacrylsäure, Alkyl-2-trifluormethacrylat, α-Fluoracrylsäure, Alkyl-α-fluoracrylat, α,β-Difluoracrylsäure, Alkyl-α,β-difluoracrylat, β,β-Difluoracrylsäure, Alkyl-β,β-difluoracrylat, α,β,β-Trifluoracrylsäure, Alkyl-α,β,β-trifluoracrylat, 1,1,1-Trifluor-2-trifluormethyl-prop-2-en, Perfluorbutadien und Kombinationen davon ausgewählt ist, und wobei das zumindest eine fluorierte Monomer vorzugsweise Vinylidenfluorid umfasst..

14. Polymer nach einem der Ansprüche 9 bis 13 mit einem Molverhältnis der Endgruppen R-X-S_{q}- oder -S_{w-q}-X'-R' zu Gesamtendgruppen von 40 bis 100 % und vorzugsweise von 70 bis 100 %.

## Revendications

1. Procédé de polymérisation d'au moins un monomère fluoré comprenant une liaison éthylène, le procédé comprenant la mise en contact de l'au moins un monomère fluoré avec un initiateur de polymérisation et un agent de transfert de chaîne, l'agent de transfert de chaîne présentant la formule (I) :
(I) R-X-(S)_{w}-X'-R'
dans lequel :
- w est un nombre allant de 2 à 8 ;
- R et R' sont indépendamment choisis parmi un atome d'hydrogène, un groupe perfluoroalkyle, un groupe hydroxy, un groupe amine, un groupe acide, un groupe ester, un groupe thioester, un groupe amide, un groupe azide, un groupe urée, un groupe carbonate, un groupe thiocarbonate, un groupe cyclocarbonate, un groupe éther, un groupe thioéther, un groupe cyano, un groupe silyle et un groupe aromatique ; et
- X et X' sont indépendamment choisis parmi :
- un radical alkyle divalent, linéaire ou ramifié, comprenant de 1 à 10 atomes de carbone ;
- -[C_{y}H_{2y})Z]ₚ-, dans lequel Z est relié à (S)_{w} ou R ou R' et dans lequel :
- y est un nombre de 1 à 5 ;
- Z est choisi parmi un -O-, -S-, -COO-, -Si(R"R"')- et -CONH-, dans lequel R" et R‴ sont indépendamment sélectionnés parmi des groupes alkyles ou alcoxy comprenant de 1 à 10 atomes de carbone ;
- p est un nombre de 1 à 10 ;
- un radical divalent aromatique.

2. Procédé selon la revendication 1, dans lequel :
- R et R' sont indépendamment choisis parmi un atome d'hydrogène, un groupe hydroxy, un groupe perfluoroalkyle comprenant au moins 5 atomes de fluor, un groupe amine, un groupe acide, un groupe azide, un groupe cyano, un groupe silyle, un groupe urée, un groupe thiourée, et un groupe ester ; et/ou
- X et X' sont indépendamment choisis parmi -(CH₂)₂-, -[(CH₂)₂O]ₚ-, -[(CH₂)₂S]ₚ₋ ou un radical divalent phényle ; et/ou
- w vaut 2.

3. Procédé selon l'une quelconque des revendications 1 à 2, dans lequel l'au moins un monomère fluoré est choisi parmi le fluorure de vinylidène, le trifluoroéthylène, le fluorure de vinyle, le tétrafluoroéthylène, l'hexafluoropropylène, l'hexafluorobutadiène, le chlorotrifluoroéthylène, le bromotrifluoroéthylène, le perfluoropropylvinyléther, le perfluorométhylvinyléther, le 2,3,3,3-tétrafluoropropène, l'acide 2-trifluorométhacrylique, le 2-trifluorométhacrylate d'alkyle, l'acide α-fluoroacrylique, l'α-fluoroacrylate d'alkyle, l'acide α,β-difluoroacrylique, l'α,β-difluoroacrylate d'alkyle, l'acide β,β-difluoroacrylique, le β,β-difluoroacrylate d'alkyle, l'acide α,β,β-trifluoroacrylique, l'α,β,β-trifluoroacrylate d'alkyle, le 1,1,1-trifluoro-2-trifluorométhyl-prop-2-ène, le perfluorobutadiène et leurs combinaisons, et dans lequel l'au moins un monomère fluoré comprend de préférence du fluorure de vinylidène.

4. Procédé selon l'une quelconque des revendications 1 à 3, dans lequel l'initiateur de polymérisation est choisi parmi un peroxyde, un persulfate, un percarbonate, un peracide, un peroxycarbonate, un perester, et de préférence l'initiateur de polymérisation est un perester choisi parmi le *tert*-butylperoxypivalate et le *tert-*amylperoxypivalate.

5. Procédé selon l'une quelconque des revendications 1 à 4, dans lequel au moins un comonomère supplémentaire choisi parmi un comonomère de styrène, un comonomère (alkyl)acrylique, un comonomère acrylique et des combinaisons de ceux-ci est mis en contact avec l'au moins un monomère fluoré, l'initiateur de polymérisation et l'agent de transfert de chaîne.

6. Procédé selon l'une quelconque des revendications 1 à 5, comprenant une première étape consistant à mettre l'agent de transfert de chaîne en contact avec l'initiateur de polymérisation pour former un mélange et une seconde étape consistant à mettre ce mélange en contact avec l'au moins un monomère fluoré.

7. Procédé selon l'une quelconque des revendications 1 à 6, dans lequel la polymérisation est réalisée à une température de 30 à 150 °C, de manière davantage préférée de 60 à 120 °C et de manière encore davantage préférée de 65 à 110 °C.

8. Procédé selon l'une quelconque des revendications 1 à 8, dans lequel la polymérisation est réalisée en l'absence de tensioactif.

9. Polymère comprenant des motifs d'au moins un monomère fluoré et comprenant au moins partiellement des groupes terminaux R-X-S_{q}- et -S_{w-q}-X'-R' dans lequel :
- w est un nombre de 2 à 8 ;
- q est un nombre de 1 à 7 ;
- R et R' sont indépendamment choisis parmi un atome d'hydrogène, un groupe perfluoroalkyle, un groupe hydroxy, un groupe amine, un groupe acide, un groupe ester, un groupe thioester, un groupe amide, un groupe azide, un groupe urée, un groupe carbonate, un groupe thiocarbonate, un groupe cyclocarbonate, un groupe éther, un groupe thioéther, un groupe cyano, un groupe silyle et un groupe aromatique ; et
- X et X' sont indépendamment choisis parmi :
- un radical alkyle divalent, linéaire ou ramifié, comprenant de 1 à 10 atomes de carbone ;
- -[C_{y}H_{2y})Z]ₚ-, dans lequel Z est relié à S_{q}, S_{w-q}, R ou R' et dans lequel :
- y est un nombre de 1 à 5 ;
- Z est choisi parmi -O-, -S-, -COO-, -Si(R"R"')- et -CONH-, dans lequel R" et R‴ sont indépendamment sélectionnés parmi des groupes alkyles ou alcoxy comprenant de 1 à 10 atomes de carbone ;
- p est un nombre de 1 à 10 ;
- un radical divalent aromatique.

10. Polymère selon la revendication 9 présentant un poids moléculaire moyen Mn, mesuré selon le procédé exposé dans la description, supérieur ou égal à 300 g/mol, de préférence de 300 à 50 000, et de manière davantage préférée de 500 à 10 000 g/mol.

11. Polymère selon la revendication 9 ou 10, dans lequel R ou R' sont indépendamment choisis parmi un atome d'hydrogène, un groupe perfluoroalkyle comprenant au moins 5 atomes de fluor, un groupe azide, un groupe cyano, un groupe hydroxy, un groupe amine, un groupe acide, un groupe silyle, un groupe urée, un groupe thiourée, et un groupe ester.

12. Polymère selon l'une quelconque des revendications 9 à 11, dans lequel X ou X' sont indépendamment choisis parmi -(CH₂)₂-, -[(CH₂)₂O]ₚ-, -[(CH₂)₂S]ₚ- ou un radical divalent phényle.

13. Polymère selon l'une quelconque des revendications 9 à 12, dans lequel l'au moins un monomère fluoré est choisi parmi le fluorure de vinylidène, le trifluoroéthylène, le fluorure de vinyle, le tétrafluoroéthylène, l'hexafluoropropylène, l'hexafluorobutadiène, le chlorotrifluoroéthylène, le bromotrifluoroéthylène, le perfluoropropylvinyléther, le perfluorométhylvinyléther, le 2,3,3,3-tétrafluoropropène, l'acide 2-trifluorométhacrylique, le 2-trifluorométhacrylate d'alkyle, l'acide α-fluoroacrylique, l'α-fluoroacrylate d'alkyle, l'acide α,β-difluoroacrylique, l'α,β-difluoroacrylate d'alkyle, l'acide β,β-difluoroacrylique, le β,β-difluoroacrylate d'alkyle, l'acide α,β,β-trifluoroacrylique, l'α,β,β-trifluoroacrylate d'alkyle, le 1,1,1-trifluoro-2-trifluorométhyl-prop-2-ène, le perfluorobutadiène et leurs combinaisons, et dans lequel l'au moins un monomère fluoré comprend de préférence du fluorure de vinylidène.

14. Polymère selon l'une quelconque des revendications 9 à 13, présentant un rapport molaire de groupes terminaux R-X-S_{q}- ou -S_{w-q}-X'-R' aux groupes terminaux totaux de 40 à 100 %, et de préférence de 70 à 100 %.
